# EUROPEAN PATENT APPLICATION

(11) **EP 4 679 847 A1**
(43) Date of publication of application: **14.01.2026**
(21) Application number: 25188088.6
(22) Date of filing: 08.07.2025
(51) Int. Cl.: H04N 23/51, H04N 23/53

(54) **HIGH-SPEED VIDEO CAMERA**

(30) Priority: 11.07.2024 JP 2024111465
(71) Applicant: SHIMADZU CORPORATION, Kyoto-shi, Kyoto 604-8511 (JP)
(72) Inventor: KAWAI, Jun, Kyoto-shi, Kyoto (JP)
(74) Representative: Müller-Boré & Partner Patentanwälte PartG mbB

(57) **Abstract**

A high-speed video camera (1) for taking a video for a high-speed phenomenon which cannot be captured by the unaided eye includes an imaging unit configured to acquire an image of a photographic subject which is an object to be photographed and a casing (10) containing the imaging unit. The same video camera further includes a tray-shaped article-containing portion (10b) on the upper surface of the casing (10). An operator can place the lens-protecting cover or other small accessories (30) in the article-containing portion (10b) to prevent them from being lost during a photographing operation.

## Description

### TECHNICAL FIELD

The present invention relates to a high-speed video camera for taking a video of fast phenomena.

### BACKGROUND ART

In order to take a video of a fast phenomenon that cannot be easily captured with normal video cameras, such as destruction, detonation, collision, electric discharge or fast motion of an object, dedicated high-speed video cameras are generally used. For example, a high-speed video camera described in Non Patent Literature 1 can take a video at extremely high speeds with the maximum rate of 10 million frames per second (10Mfps), thereby exhibiting enormous power in detailed observation of fast phenomena. As disclosed in Patent Literature 1, this type of high-speed video camera is used for such purposes as the measurement or observation of the distortion or destruction of an object in a tensile test, for example.

### CITATION LIST

### PATENT LITERATURE

Patent Literature 1: WO 2020/065815 A

### NON PATENT LITERATURE

Non Patent Literature 1: "High-Speed Video Camera Hyper Vision HPV-X2", Shimadzu Corporation, [online], [accessed on July 1, 2024], the Internet

### SUMMARY OF INVENTION

### TECHNICAL PROBLEM

Unlike common video cameras which are primarily intended for personal use, the previously described type of high-speed video camera is mostly operated by a plurality of individuals at a company, university, research institute or similar organization which is the user of the device. Therefore, appropriate device management is required in order to maintain the video camera in good condition. This management normally includes instructing operators to put the video camera in the predetermined case and return it to the designated storage site after the use of the video camera.

However, at the testing or measurement site at which such a high-speed video camera is used, small accessories supplied with the video camera are liable to be lost partially because there are various testing machines, measurement instruments, working tables and other types of equipment installed in large numbers at the site. In particular, in the case of a lens-protecting cover, connector-protecting cover or similar accessory, the operator using the video camera often places those accessories on an area near the video camera after removing them from the video camera. These accessories are often lost since they easily go into a space under a measurement instrument (or the like) or fall into a space between measurement instruments in the course of the photographic operation. For the user of the video camera, such a loss of accessories means not only an increase in the direct cost for repurchasing the lost items but also a deterioration in working efficiency due to the useless time required to search for the lost items as well as a consequential increase in the operation cost.

The present invention has been developed to solve such a problem. Its primary objective is to provide a high-speed video camera capable of preventing the loss of small accessories.

### SOLUTION TO PROBLEM

One mode of the high-speed video camera according to the present invention is a high-speed video camera for taking a video for a high-speed phenomenon which cannot be captured by the unaided eye, including an imaging unit configured to acquire an image of a photographic subject which is an object to be photographed and a casing containing the imaging unit, where the high-speed video camera further includes a tray-shaped article-containing portion on the upper surface of the casing.

### ADVANTAGEOUS EFFECTS OF INVENTION

In the previously described mode of the high-speed video camera according to the present invention, various small items which are originally supplied with the device or additionally used in combination with the video camera can be placed in the article-containing portion. In this state, the video camera can be transferred to an appropriate location for photographic operation. Thus, according to the present invention, it is possible to prevent the loss of small yet important accessories such as a lens-protecting cover or connector-protecting cover, thereby avoiding an unnecessary increase in cost due to the loss of an accessory.

### BRIEF DESCRIPTION OF DRAWINGS

Fig. 1 is an external perspective view of a high-speed video camera in one embodiment of the present invention.
Figs. 2A and 2B are a schematic side view and a schematic top view of the high-speed video camera according to the present embodiment, respectively.
Fig. 3 is a schematic block circuit diagram of the high-speed video camera according to the present embodiment.
Fig. 4 is a schematic diagram of a photographing system including the high-speed video camera according to the present embodiment.
Fig. 5 is an external perspective view of the high-speed video camera according to the present embodiment with a monitor device mounted.
Figs. 6A and 6B are schematic partial front views of the high-speed video camera according to the present embodiment with a monitor device mounted.

### DESCRIPTION OF EMBODIMENTS

The term "high-speed photography" in the present description refers to the acquisition of a video at a frame rate of approximately 10 million frames per second or even higher.

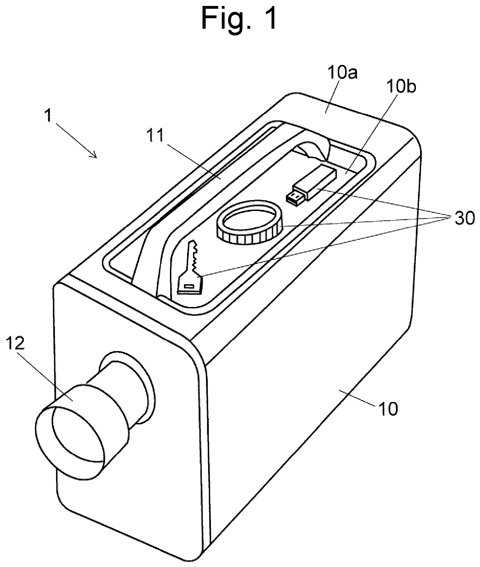

One embodiment of the high-speed video camera according to the present invention is hereinafter described with reference to the attached Figs. 1-6B.

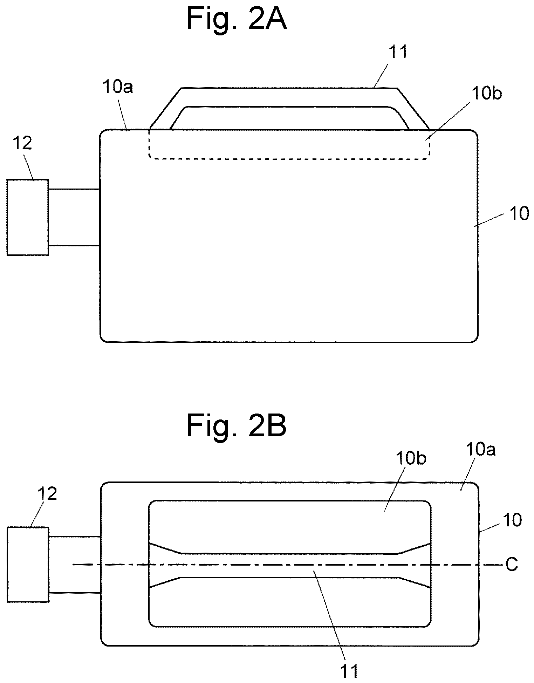

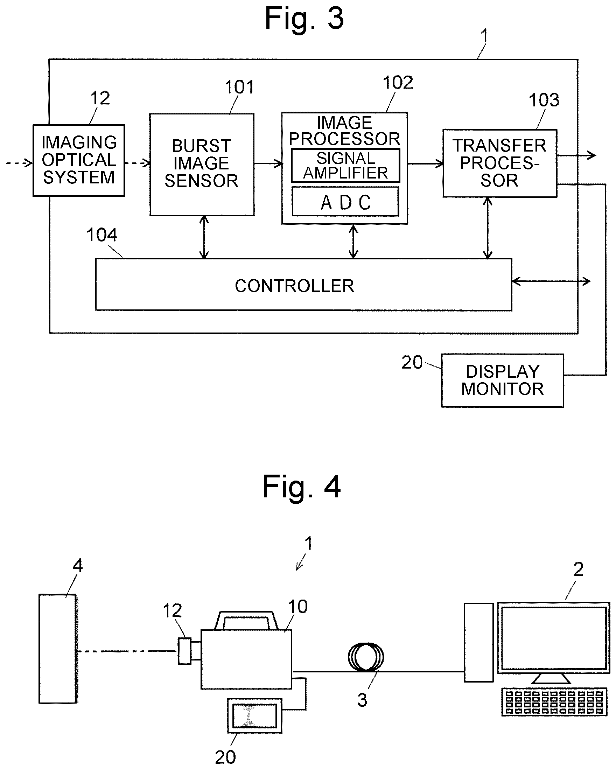

Fig. 1 is an external perspective view of a high-speed video camera according to the present embodiment. Figs. 2A and 2B are a schematic side view and a schematic top view of the high-speed video camera according to the present embodiment. Fig. 3 is a schematic block circuit diagram of the high-speed video camera according to the present embodiment. Fig. 4 is a schematic diagram of a photographing system including the high-speed video camera according to the present embodiment.

As shown in Fig. 4, the photographing system, which is configured to take a video of a photographic subject 4 at high speeds, includes a high-speed video camera 1 and a personal computer (PC) 2 connected to each other by a cable 3. The PC 2 includes a PC main unit having a CPU and other built-in components as well as an input unit (e.g., a keyboard and a mouse) and a display unit (e.g., a display monitor).

As shown in Figs. 1, 2A and 2B, the high-speed video camera 1 includes: a casing 10 having a box-like shape which is approximately a rectangular parallelepiped; an imaging optical system 12 which at least partially protrudes from the front face of the casing 10; and a handle 11 for carrying the video camera 1 by hand.

As shown in Fig. 3, the high-speed video camera 1 has functional blocks within the casing 10, such as a burst image sensor 101, image processor 102, transfer processor 103 and controller 104, in addition to the imaging optical system 12. The image processor 102 includes a signal amplifier, analogue-to-digital converter (ADC) and other components. The transfer processor 103 includes a buffer memory and other components.

The burst image sensor 101 is an image sensor having a special structure for high-speed photography. It includes a considerable number of photoelectric conversion elements arranged in a two-dimensional form and a memory section capable of accumulating N frames of image signals, where N is an integer greater than one (e.g., N=100). In common types of image sensors, one frame of image signals acquired in the photoelectric conversion elements need to be sent to the outside of the sensor immediately after the acquisition of those image signals. In contrast, in the burst image sensor 101, one frame of image signals acquired in the photoelectric conversion elements can be transferred to the internal memory section through parallel signal lines within an extremely short period of time. This enables the burst image sensor 101 to successively take N frames of image signals without requiring those signals to be read from the sensor 101 to the outside.

A typical photographic operation in the previously described photographing system is as follows.

The photographic conditions such as the photographic mode (trigger condition), frame rate and exposure time are previously set at the PC 2 and sent to the controller 104. When a trigger for photographic operation is externally given, the burst image sensor 101 performs a high-speed continuous photographic operation under the control of the controller 104. After the photographic operation has been initiated, an optical image of the photographic subject 4 coming through the imaging optical system 12 is projected onto the light-receiving plane of the burst image sensor 101. The burst image sensor 101 produces image signals at the set frame rate and accumulates them in the internal memory section. After the completion of the photographic operation, the image signals held in the internal memory section of the burst image sensor 101 are sequentially read out and sent to the image processor 102. The image processor 102 amplifies each of the input image signals and converts it into a piece of digital data. The transfer processor 103 transfers image data to the PC 2 through the cable 3 at a predetermined timing.

This high-speed video camera 1 is provided with accessories including: a lens-protecting cover for protecting an imaging lens included in the imaging optical system 12; a connector-protecting cover for protecting a connector to which the cable 3 (or the like) is to be connected, the connector located on the back side of the casing 10; a case for containing the video camera 1 when this video camera 1 is stored; a key to the case; and various connection cables including the cable 3. It should be noted that the "accessories" in the present context include not only the various protection covers and other items which are provided as standard items (i.e., with no additional cost) when the high-speed video camera 1 is purchased, but also items which the user purchases as option extras for additional costs.

For example, the lens-protecting cover and the connector-protecting cover are attached to the video camera 1 when this video camera 1 is in storage. The operator removes those covers before using the video camera 1. In the conventional case, the operator should place the removed covers (and other items) at an appropriate location and temporarily take charge of them. However, it has actually been the case that those items are often placed on a measurement instrument or working table (or the like) in the surrounding area and become lost. In contrast, the high-speed video camera 1 according to the present embodiment has a tray-shaped article-containing portion 10b formed in the upper flat surface 10a of the casing 10, allowing small accessories 30 and similar items to be contained in this article-containing portion 10b, as shown in Fig. 1. In the example of Fig. 1, the lens-protecting cover, the key to the case and a USB memory are contained. Needless to say, any type of item may be placed in this portion.

As shown in Fig. 2B, the article-containing portion 10b as viewed from above has a substantially rectangular shape which is approximately symmetrical with respect to the center line C extending in the front-back direction of the casing 10. The handle 11 is designed to span over the article-containing portion 10b along the center line C.

In the photographing system using this high-speed video camera 1, the image data acquired at high speeds are saved in the PC 2 and it is basically assumed that the saved image should be viewed on the PC 2. However, when the operator performs the task of checking the photographing range (the field or angle of view of the high-speed video camera 1) and adjusting it (by changing the position and/or orientation of the video camera 1), it will be inconvenient and inefficient if the operator is forced to visually check the remote image on the monitor of the PC 2 or walk all the way to the location of the monitor of the PC 2 to check the image. To address this problem, the present high-speed video camera 1 is provided with a real-time image-signal output connector at the back of the casing 10 so that the operator at or near the video camera 1 can visually check an image acquired in real time in place of the high-speed photographic image. By connecting a monitor to the connector by a cable, the real-time image can be displayed on that monitor.

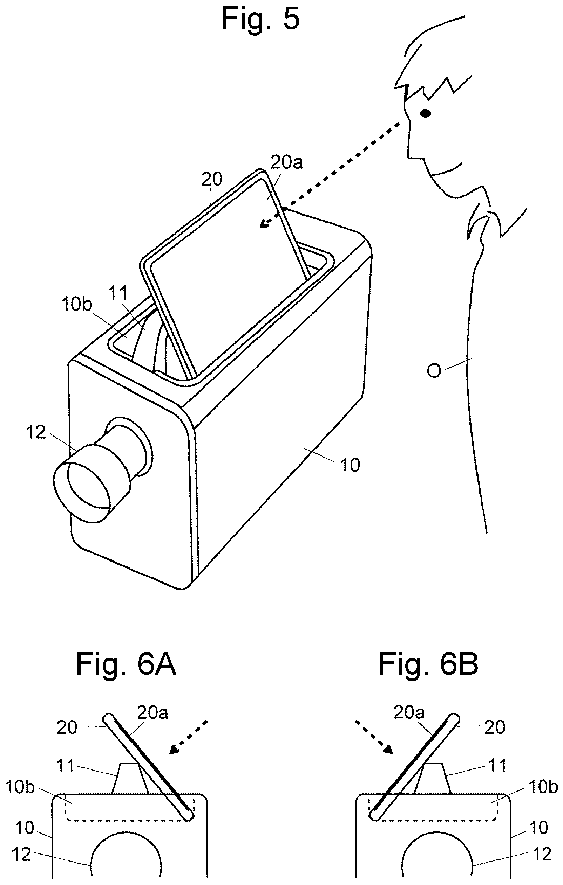

The monitor to be used for this purpose may be a commonly available tablet PC (or similar device). A display monitor 20 provided as an option extra may also be used, in which case the monitor 20 can be used in combination with the video camera 1 as shown in Figs. 5, 6A and 6B. Fig. 5 is an external perspective view of the high-speed video camera 1 according to the present embodiment with the display monitor 20 mounted. Figs. 6A and 6B are schematic partial front views of the high-speed video camera 1 according to the present embodiment with the display monitor 20 mounted.

The substantially plate-shaped display monitor 20 has a substantially rectangular shape when viewed perpendicularly to its principal plane, with its longitudinal length shorter than the length of the article-containing portion 10b in the front-back direction. Therefore, as shown in Figs. 5, 6A and 6B, the longer side edge of the display monitor 20 can be placed in the hollow area of the article-containing portion 10b. The display monitor 20 placed in this manner has its lower end caught at the corner portion between the bottom of the article-containing portion 10b and an inner wall vertically extending from the bottom while its back side is supported by the handle 11. Thus, the display monitor 20 is held on the upper surface of the casing 10 with the display surface 20a directed obliquely upward, allowing the operator O to look into the display surface 20a and check the real-time image acquired by the high-speed video camera 1.

As noted earlier, both the shape of the article-containing portion 10b as viewed from above and the handle 11 are substantially symmetrical with respect to the center line C. Therefore, the display monitor 20 can not only be mounted so that the display surface 20a is directed obliquely upward right as shown in Fig. 5 and 6A, but it can also be mounted so that the display surface 20a is directed obliquely upward left as shown in Fig. 6B. In other words, the way in which the display monitor 20 is set in the article-containing portion 10b can be changed depending on the position of operator O relative to the video camera 1 so that the monitor will be easily viewable for operator O. This improves the operability and workability, thereby providing a convenient working environment for the user in the high-speed photographic operation.

It should be noted that the previously described embodiment is a mere example of the present invention, and any modification, change or addition appropriately made within the spirit of the present invention will naturally fall within the scope of claims of the present application.

For example, the handle 11 in the previously described embodiment is made of a continuously extending member with both ends fixed to the upper surface 10a (the inner wall of the article-containing portion 10b) of the casing 10. This configuration may be changes so that only one end of the member is fixed to the upper surface 10a of the casing 10. Another possible configuration is a handle consisting of two separate members extending toward each other, leaving a gap in between. The shape and/or depth (or the like) of the article-containing portion 10b as viewed from above may also be appropriately changed. For example, the article-containing portion 10b may have depressions formed in its bottom into which a specific type of item such as the key to the case or the lens-protecting cover can be fitted in order to prevent the accessories from being displaced within the article-containing portion 10b even when the video camera 1 is tilted in some situation, e.g., when the video camera 1 is moved.

### [Various Modes]

It is evident to a person skilled in the art that the previously described illustrative embodiment is a specific example of the following modes of the present invention.

(Clause 1) One mode of the high-speed video camera according to the present invention is a high-speed video camera for taking a video for a high-speed phenomenon which cannot be captured by the unaided eye, including an imaging unit configured to acquire an image of a photographic subject which is an object to be photographed and a casing containing the imaging unit, where the high-speed video camera further includes a tray-shaped article-containing portion on the upper surface of the casing.

In the high-speed video camera according to Clause 1, various small items which are originally supplied with the video camera or additionally used in combination with the video camera can be placed in the article-containing portion. In this state, the video camera can be transferred to an appropriate location for photographic operation. Thus, with the video camera according to Clause 1, it is possible to prevent the loss of small yet important accessories such as a lens-protecting cover or connector-protecting cover, thereby avoiding an unnecessary increase in cost due to the loss of an accessory.

(Clause 2) The high-speed video camera according to Clause 1 may further include a handle designed to span over the article-containing portion.

(Clause 3) In the high-speed video camera according to Clause 2, the handle and the article-containing portion may be configured to be capable of holding a plate-shaped monitor separate from the high-speed video camera in such a manner that the lower end of the monitor is caught at a corner portion between a bottom of the article-containing portion and a wall portion vertically extending from the bottom while the back side of the monitor is supported by the handle so that a display surface of the monitor is directed obliquely upward.

The monitor in the high-speed video camera according to Clause 3 may typically be a monitor to be used by an operator for checking a real-time image acquired by the video camera. The high-speed video camera according to Clause 3 does not only allow the operator to connect a monitor for checking an image when, for example, the operator adjusts the position and/or orientation of the present video camera, but it also the orientation and/or angle of the monitor may be set so that the monitor will be easily viewable. This configuration improves the efficiency of the task of adjusting the photographing range in high-speed photography.

(Clause 4) In the high-speed video camera according to Clause 3, the casing as viewed from above may have an elongated rectangular shape, the article-containing portion as viewed from above may have a symmetrical shape with respect to the center line in the direction of the longer side of the rectangular shape, and the handle may be located on the center line and be configured to allow the display surface of the plate-shaped monitor to be held in two selectable directions both substantially orthogonal to the center line.

The high-speed video camera according to Clause 4 allows the operator to set the orientation and/or angle of the monitor so that the monitor will be easily viewable regardless of whether the operator is on the right or left side of the video camera. This configuration can further improve the efficiency of the task of adjusting the photographing range in a high-speed photographic operation.

### REFERENCE SIGNS LIST

1 ... High-Speed Video Camera
10 ... Casing
10a ... Upper Surface
10b ... Article-Containing Portion
11 ... Handle
12 ... Imaging Optical System
101 ... Burst Image Sensor
102 ... Image Processor
103 ... Transfer Processor
104 ... Controller
2 ... Personal Computer (PC)
3 ... Cable
4 ... Photographic Subject
20 ... Display Monitor
20a ... Display Surface
30 ... Accessory

## Claims

1. A high-speed video camera (1) for taking a video for a high-speed phenomenon which cannot be captured by an unaided eye, including an imaging unit configured to acquire an image of a photographic subject which is an object to be photographed and a casing (10) containing the imaging unit, wherein:
the high-speed video camera (1) further includes a tray-shaped article-containing portion (10b) on an upper surface (10a) of the casing (10).

2. The high-speed video camera (1) according to claim 1, further comprising a handle (11) designed to span over the article-containing portion (10b).

3. The high-speed video camera (1) according to claim 2, wherein the handle (11) and the article-containing portion (10b) are configured to be capable of holding a plate-shaped monitor (20) separate from the high-speed video camera (1) in such a manner that a lower end of the monitor (20) is caught at a corner portion between a bottom of the article-containing portion (10b) and a wall portion vertically extending from the bottom while a back side of the monitor (20) is supported by the handle (11) so that a display surface (20a) of the monitor (20) is directed obliquely upward.

4. The high-speed video camera (1) according to claim 3, wherein the casing (10) as viewed from above has an elongated rectangular shape, the article-containing portion (10b) as viewed from above has a symmetrical shape with respect to a center line (C) in a direction of a longer side of the rectangular shape, and the handle (11) is located on the center line (C) and is configured to allow the display surface (20a) of the plate-shaped monitor (20) to be held in two selectable directions both substantially orthogonal to the center line (C).
